# DEMANDE DE BREVET EUROPEEN

(11) **EP 0 611 179 A1**
(43) Date de publication de la demande: **17.08.1994**
(21) Numéro de dépôt: 94400156.9
(22) Date de dépôt: 25.01.1994
(51) Int. Cl.: H01G 1/017, H01G 4/38

(54) **Condensateur de puissance**

(30) Priorité: 29.01.1993 FR 9300950
(71) Demandeur: COMPAGNIE EUROPEENNE DE COMPOSANTS ELECTRONIQUES LCC, F-92400 Courbevoie (FR)
(72) Inventeur: Vincent, Claude, F-92402 Courbevoie Cedex (FR)
(74) Mandataire: Guérin, Michel

(57) **Abrégé**

L'invention concerne un condensateur de puissance constitué par au moins un élément capacitif obtenu par le bobinage d'aux moins deux films plastiques métallisés à surface rugueuse. Les films plastiques métallisés présentent des motifs de crénelage (6) formés de démétallisations locales et définissant des surfaces métallisées (5) destinées à isoler les défauts qui apparaissent sur le film pendant la durée de vie du condensateur. Selon l'invention les surfaces métallisées (5) sont sensiblement égales aux surfaces des défauts à isoler.

## Description

La présente invention concerne les condensateurs de puissance, et plus particulièrement les condensateurs de puissance de type constitué par au moins un élément capacitif obtenu par bobinage d'au moins deux films diélectriques métallisés.

En fait, la présente invention concerne plus particulièrement les condensateurs de puissance utilisés dans les éléments de filtrage montés sur du matériel fixe ou roulant, tel que, par exemple, le matériel embarqué dans les trains. De tels condensateurs présentent une énergie spécifique importante, en général de l'ordre de 100 joules/litre.

Le problème qui se pose à l'heure actuelle est de pouvoir intégrer de plus en plus de matériels dans des volumes réduits tout en améliorant les performances techniques ainsi que la fiabilité desdits matériels.

Ainsi en est-il, par exemple, des futures générations de trains à grande vitesse qui devront embarquer différents types de convertisseurs de façon à pouvoir fonctionner avec différents réseaux d'alimentation.

Il sera alors nécessaire de réduire le volume et le poids des matériels embarqués.

L'invention répond à cette nécessité.

D'autre part, ces trains devront non seulement accroître leur vitesse mais aussi être soumis à des conditions climatiques plus contraignantes du fait des grandes distances parcourues. Les performances électriques des matériels embarqués devront donc être supérieures aux performances actuelles.

L'invention répond aussi à cette nécessité.

Un avantage de l'invention est de réaliser des condensateurs de puissance dont l'énergie spécifique est supérieure à 150 joules/litre pour une durée de vie égale à au moins 100 000 heures à la température de 70° C.

Un autre avantage de l'invention consiste en ce que les condensateurs présentent des densités de l'ordre de 1,1 kg/dm³.

D'autres caractéristiques et avantages de l'invention apparaîtront à la lecture d'un mode de réalisation préférentiel fait avec référence aux figures ci- annexées dans lesquelles :
- la figure 1 est une vue en perspective d'un élément capacitif obtenu après bobinage et conforme à la présente invention
- la figure 2 est une vue en coupe d'un ensemble de deux films plastiques métallisés destiné à réaliser un élément capacitif selon le mode de réalisation préférentiel de l'invention ;
- la figure 3 est une vue en coupe d'un ensemble de deux films plastiques métallisés destiné à réaliser un élément capacitif selon un deuxième mode de réalisation de l'invention ;
- la figure 4 est une vue du motif de crénalage des films plastiques métallisés selon le mode de réalisation préférentiel de l'invention ;
- la figure 5 est une vue en perspective d'un pain capacitif constitué de plusieurs éléments capacitifs
- la figure 6 est une vue en perspective d'un pain capacitif tel que représenté en figure 5 après câblage des différents éléments
- la figure 7 est une vue en coupe d'un condensateur montrant deux pains capacitifs à l'intérieur d'une cuve.

Sur toutes les figures les mêmes repères désignent les mêmes éléments.

Selon l'art antérieur décrit dans le brevet français n° 90 08227 déposé le 29 juin 1990 au nom de la Demanderesse, les condensateurs de puissance sont constitués par au moins un élément capacitif obtenu par bobinage d'au moins deux films plastiques métallisés, ledit élément capacitif étant pressé de manière à former un élément plat. Le film plastique est un film polymère à surface rugueuse dont la métallisation présente un crénelage formé de démétallisations locales afin d'améliorer l'auto-cicatrisation.

Le bobinage est réalisé autourd'une broche avec un asservissement continu du foisonnement. Par foisonnement, on entend l'inter-espace donné par le bobinage entre les couches.

Comme cela est connu de l'homme de l'art, les éléments capacitifs sont imprégnés de diélectrique liquide lors de la réalisation du condensateur final. Pour obtenir une bonne imprégnation et de bonnes performances, il est important que le foisonnement soit le plus constant possible.

Une fois le bobinage terminé, l'élément capacitif cylindrique est extrait de la broche. Il est alors aplati.

La présente invention se situe dans le contexte des condensateurs décrits dans la demande de brevet mentionné ci-dessus et permet de résoudre les problèmes évoqués précédemment.

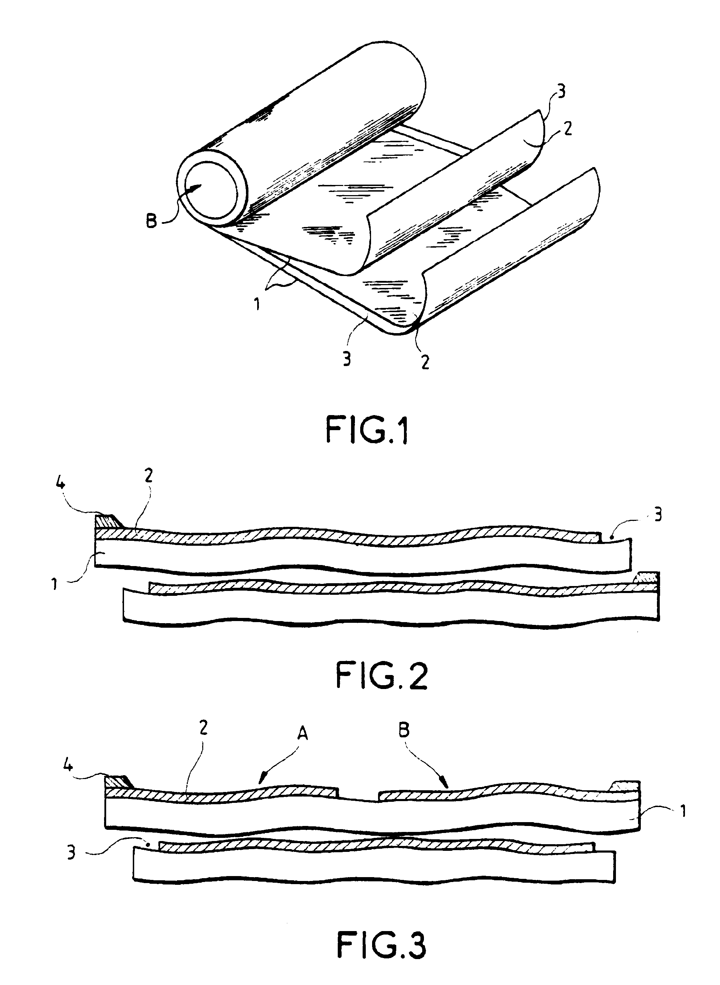

Comme représenté sur la figure 1, le ou les éléments capacitifs constituant le condensateur de puissance sont obtenus par bobinage, autour d'une broche B, d'au moins deux films 1 présentant des zones métallisées 2 et, sur les bords opposés, des marges non métallisées 3. Le film métallisé utilisé dans le cadre de la présente invention est, de préférence, un film homopolymère de polypropylène. Parmi les films polymères, le film homopolymère de polypropylène présente les meilleures qualités pour participer aux résultats souhaités. Sa faible densité (0,91) permet une diminution du poids du condensateur par rapport à l'art antérieur. De plus sa rigidité diélectrique et sa bonne aptitude à l'auto-cicatrisation contribuent à satisfaire les contraintes d'énergie spécifique.

Comme cela a été mentionné ci-dessus, les éléments capacitifs doivent être imprégnés de diélectrique liquide lors de la réalisation du condensateur final.

Afin de permettre une bonne imprégnation, le film plastique est de préférence un film à surface rugueuse, comme représenté en figure 2. Il peut être rugueux sur une ou deux faces. De manière connue, ce film est prétraité afin de faciliter l'accrochage de la métallisation 2. Le métal utilisé est, de préférence, de l'aluminium déposé sous vide par évaporation et condensation sur le film. Selon le mode de réalisation préférentiel de l'invention, la couche d'aluminium présente une résistivité de 2,5 ohms ± 20 % par carré.

Cette valeur de résistivité conduit à réaliser une couche d'aluminium d'épaisseur suffisante pour acquérir une grande stabilité dans le temps, à l'air ou en présence du liquide d'imprégnation.

Selon l'invention, un dépôt métallique 4 vient renforcer le bord métallisé de chaque film.

Le métal choisi pour réaliser ce dépôt est de même nature que celui utilisé lors de l'opération ultérieure de shoopage de façon à assurer une meilleure tenue du composant final. Préférentiellement ce métal est du zinc mais peut aussi être de l'aluminium. La résistivité du dépôt est de 1 à 2 ohms par carré, préférentiellement 1 ohm ± 25 % par carré.

La présence du dépôt métallique 4 permet d'augmenter les seuils limites de courant crête et efficace que le condensateur peut tolérer. La valeur de ces seuils est en effet alors multipliée par un facteur de l'ordre de 4.

La figure 3 représente une configuration différente de celle représentée en figure 2.

Selon cette configuration, la capacité définie par la mise en regard des deux films métallisés 1 est sensiblement divisée par 4 par rapport à celle définie selon la configuration de la figure 2. La métallisation de l'un des deux films est alors scindée en deux zones distinctes A et B séparées par un espace non métallisé. Les deux bords extérieurs de ce film sont métallisés et recouverts d'un dépôt 4 de même nature que celui mentionné précédemment. Le fi lm qui est en regard est, lui, uniformément métallisé sauf sur ses deux bords.

Cette configuration est choisie lorsque l'on désire travailler avec des tensions plus élevées que celles utilisées avec la configuration précédente (cf. figure 2).

Selon l'art antérieur décrit dans le brevet français n° 90 08227 déposé le 29 juin 1990 au nom de la Demanderesse, les films métallisés présentent un crénelage formé par des démétallisations locales. Le crénelage est alors constitué par des créneaux droits ou en forme de T. Le crénelage permet d'isoler les défauts qui apparaissent sur le film pendant la durée de vie du condensateur.

Selon l'art antérieur, les surfaces élémentaires définies par le crénelage sont calculées, toutes choses égales par ailleurs, de façon à garantir une variation de capacité de l'ordre de 2 % au terme de la durée de vie moyenne du condensateur. Celà conduit à définir des surfaces de l'ordre de 40 cm² alors que les défauts qui apparaissent sur le film ne sont, par exemple, que de l'ordre de 1 cm². Ceci représente un inconvénient puisqu'une grande partie de la surface est neutralisée inutilement.

Selon l'invention, les surfaces élémentaires définies par le crénelage sont calculées de l'ordre de grandeur des défauts à neutraliser. Ainsi, la somme des surfaces neutralisées au terme de la durée de vie du condensateur est-elle beaucoup plus faible selon l'invention que selon l'art antérieur.

Pour un condensateur de valeur de capacité donnée, l'invention consiste à diminuer la surface totale de métallisation des films plastiques de façon à garantir une variation de capacité de l'ordre de 2 % au terme de la durée de vie du condensateur.

L'épaisseur des films plastiques est alors diminuée de façon à garantir une valeur de capacité qui soit la même selon l'invention et selon l'art antérieur.

Le volume d'un condensateur de valeur de capacité donnée se trouve alors avantageusement réduit d'environ 35 % et le poids diminué d'environ 50 %.

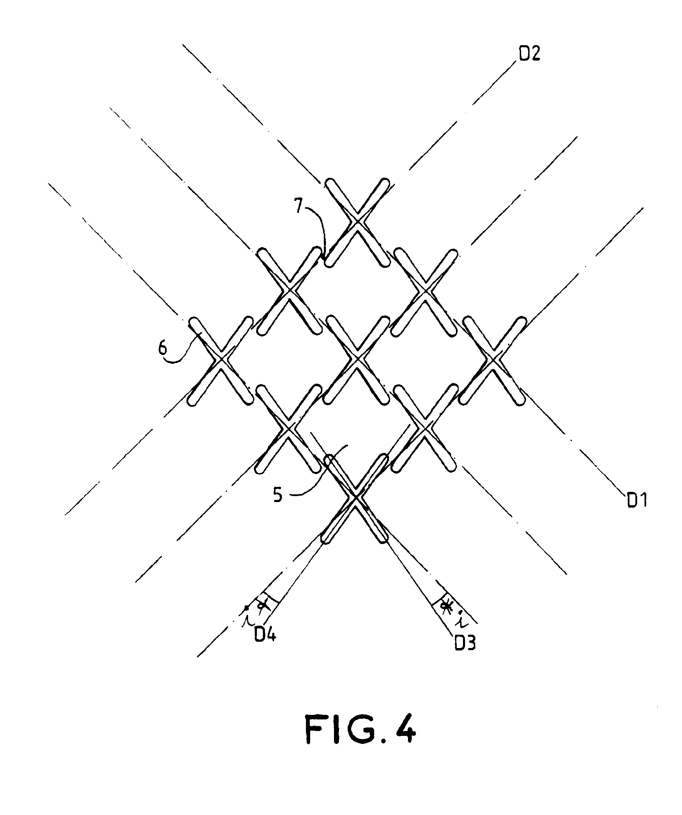

La figure 4 est une vue des motifs de crénelage selon le mode de réalisation préférentiel de l'invention.

Les motifs de crénelage 6 sont en forme de croix. Leur configuration est telle que les centres desdites croix sont alignés suivant deux directions D1 et D2.

Chaque croix comprenant quatre branches, quatre motifs voisins définissent une zone métallisée 5 en forme de losange, ladite surface étant sensiblement égale à la surface des défauts à isoler.

Selon le mode de réalisation préférentiel de l'invention les distances séparant deux alignements voisins de la direction D1 sont égales entre elles et égales aux distances séparant deux alignements voisins de la direction D2. Les deux branches opposées d'une même croix sont alignées de façon à définir une même direction. Selon ce mode de réalisation préférentiel, les branches d'une même croix ne sont pas à angle droit. Ainsi la direction D3 définie par un premier ensemble de deux branches opposées d'une même croix ne fait-elle pas un angle droit avec la direction D4 définie par le deuxième ensemble de deux branches opposées de ladite croix. Pour chaque motif en forme de croix, la direction D3 fait un léger angle i avec la direction D1 et la direction D4 fait le même angle i avec la direction D2. La longueur de chaque branche est supérieure à la moitié de la distance qui sépare les centres de deux motifs en forme de croix voisins. Ainsi, la présence de l'angle i permet-elle que deux branches voisines ne se rejoignent pas et que la distance qui les sépare définisse une zone fusible 7 qui a pour fonction de se volatiliser lorsqu'un claquage survient.

Selon le mode de réalisation préférentiel de l'invention la surface définie par les losanges 5 est de l'ordre de 1 cm2.

L'invention concerne également d'autres modes de réalisation que le mode décrit ci-dessus.

L'invention concerne plus généralement toute configuration des motifs de crénelage permettant de définir des zones métallisées 5 ayant une surface sensiblement égale à la surface des défauts à isoler.

Ainsi en est-il d'un mode de réalisation ou les quatre branches d'une même croix sont à angle droit et ou l'angle i est nul. La longueur de chaque branche est alors inférieure à la moitié de la distance qui sépare les centres de deux croix voisines. La zone fusible 7 est alors définie par la distance qui sépare les extrémités de deux branches contiguës de même direction .

Les motifs de crénelage 6 peuvent être réalisés de plusieurs manières différentes. Selon le mode de réalisation préférentiel, c'est le procédé connu de l'homme de l'art sous le nom de "procédé offset" qui est utilisé. Lors de la métallisation des films plastiques, le métal n'est alors déposé que là où il est nécessaire.

Un autre procédé repose sur la démétallisation, par faisceau laser, des films plastiques entièrement métallisés.

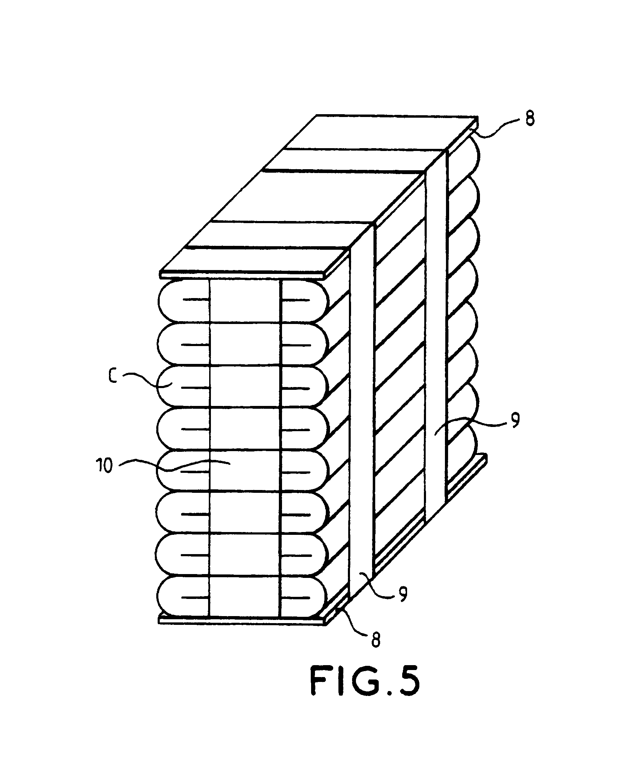

Comme représenté sur la figure 5, pour obtenir un condensateur de puissance présentant une valeur de capacité spécifique, plusieurs éléments plats C, à savoir huit dans le mode de réalisation représenté sur la figure 5, sont empilés les uns sur les autres. Ils sont maintenus entre deux plaques 8 réalisées par exemple en tissu de verre époxy, l'ensemble étant solidarisé par l'intermédiaire de deux bandes plastiques 9 de manière à former un pain capacitif cerclé.

Conformément au procédé de réalisation des condensateurs de puissance de la présente invention, afin de stabiliser mécaniquement le film diélectrique, le pain d'éléments plats est soumis à une cuisson dans une étuve sous-vide. De préférence, cette cuisson est réalisée à une température d'environ 80°C sous un vide inférieur à 10-² mm d'Hg. Après avoir atteint la température et le vide désiré, le pain est laissé dans l'étuve pendant 24 heures. Puis, on fait redescendre la température jusqu'à 20°C et on laisse les pains pendant 16 heures avant de les sortir à température ambiante.

Une fois cette opération réalisée, on prépare les différents éléments plats de manière à pouvoir effectuer le shoopage des terminaisons latérales. Dans le mode de réalisation représenté, le shoopage est réalisé de manière connue par projection d'un métal tel que du zinc, de part et d'autre du pain capacitif, sur une surface 10 (épaisseur couche de zinc 0,7 mm).

Après le shoopage, on effectue le nettoyage des pains de manière à éliminer les poussières de zinc. Ce nettoyage a lieu, par exemple, par aspiration puis soufflage sous air comprimé à 4 bars. Après cette opération de nettoyage, le câblage des différents éléments capacitifs C est effectué.

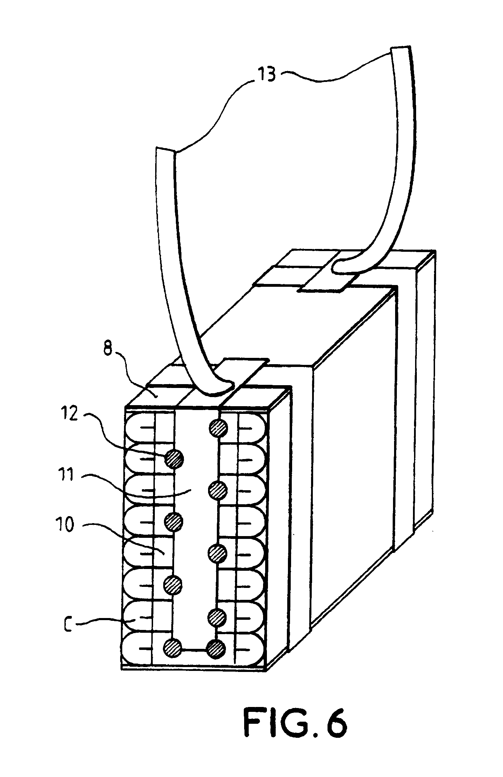

Comme représenté en figure 6, ce câblage est réalisé en soudant tout d'abord un clinquant de cuivre entamé 11 sur chacune des deux surfaces shoopées 10, à l'aide de points de soudure 12.

Chacun des deux clinquants 11 est rabattu sur les plaques de maintien 8. Un fil de connexion 13 est soudé sur chacun des deux clinquants ainsi rabattus.

Dans le mode de réalisation de la présente invention, avant de réaliser l'imprégnation du pain d'éléments capacitifs, on effectue un essai de régénération. Cet essai à sec permet d'éliminer les points faibles, d'obtenir une population plus homogène et d'augmenter les rendements finaux. Le premier essai consiste à décharger dans chaque pain une énergie ballast de, par exemple, 62 joules, qui correspond à la charge sous 500 volts d'un condensateur de 500 f..lf. Cet essai permet de réaliser le décourt- circuitage.

Ensuite, on réalise des essais de régénération en tension. Chaque pain est chargé à une tension continue correspondant sur le film à un gradient de, par exemple, 175 V/wm. Cette tension est appliquée pendant un temps d'environ 30 secondes. On mesure la capacité après l'essai. Si le pain capacitif a perdu plus 4 % de capacité il est éliminé. Une fois ces essais réalisés, le pain est emballé dans plusieurs épaisseurs de films de polypropylène de façon à isoler les éléments capacitifs des particules métalliques éventuellement générées par les opérations de shoopage, de soudure et de câblage.

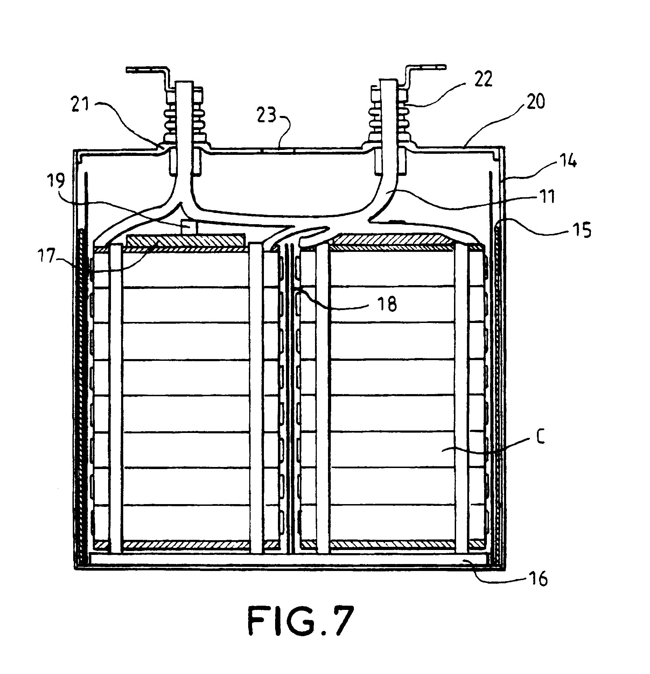

Sur la figure 7, deux pains capacitifs sont montés dans la même cuve 14. Il est évident pour l'homme de l'art qu'une même cuve peut contenir un nombre différent de pains. Conformément à la présente invention, on utilise comme cuve un boîtier parallèlépipé- dique métallique, réalisé par exemple en acier, en inox, ou en aluminium. Le boîtier métallique permet de mettre facilement à la masse le condensateur et est utilisé pour des raisons de sécurité. Comme représenté sur la figure 7, la cuve métallique 14 est garnie intérieurement avec des plaques 15, 16 ainsi qu'avec une plaque de maintien 17 insérée ultérieurement, lesdites plaques étant réalisées en matériaux isolants, par exemple en polypropylène. Ces plaques en matériaux isolants servent à isoler électriquement le ou les pains par rapport à la cuve. A titre d'exemple, la plaque 16, disposée en fond de cuve, présente une épaisseur de 10 mm tandis que les profilés latéraux 15 présentent une épaisseur de 2 mm. Ensuite, un ou plusieurs pains d'éléments capacitifs C (par exemple 2 pains comme sur la figure 7), sont introduits dans la cuve métallique 14 et sont calés avec un ou plusieurs jeux de plaques 18 réalisées elles aussi en matériaux isolants. Le calage du ou des pains à l'intérieur de la cuve est essentiel pour que les éléments capacitifs supportent les vibrations. La plaque de maintien 17 est ensuite introduite. Des équerres 19 sont alors soudées en haut de cuve pour immobiliser l'ensemble.

La cuve est ensuite munie d'un couvercle 20 présentant deux ouvertures 21 pour le passage des bornes de connexion 22. Une fois les pains capacitifs montés dans la cuve, on réalise leur imprégnation par l'intermédiaire de l'ouverture 23. Cette imprégnation est effectuée en utilisant un diélectrique liquide, de préférence un diélectrique de type végétal tel que l'huile de colza qui a pour principal avantage de ne pas abîmer la métallisation et de pénétrer très faiblement le film polypropylène.

L'huile de colza est aussi choisie à cause de sa capacité à absorber les gaz émis lors de la phase d'auto-cicatrisation. Cela évite ainsi le gonflement du condensateur et, en conséquence, les risques d'explosion.

Toutefois, il est évident pour l'homme de l'art que des mélanges d'huile de colza et de liquides de synthèses aromatiques pourraient aussi être utilisés, sous réserve qu'ils ne détériorent pas la métallisation. Des adjuvants tels que anti-oxydant et époxy sont ajoutés dans des préparations inférieures au % ; ces adjuvants, en particulier l'époxy, permettent d'augmenter la durée de vie des condensateurs.

L'imprégnation se réalise en deux phases. On effectue tout d'abord le séchage du condensateur, de préférence à une température de 70° C sous un vide de 10-² mm de mercure. On considère que le condensateur est correctement séché lorsqu'on a atteint le couple 70° C/10-2 mm de mercure pendant 24 heures.

Puis on réalise l'imprégnation proprement dite. Pour cela, on dégaze sous vide, à 70° C, le liquide et on le dépollue sur des matériaux terres ou sur colonne d'alumine activée. Le liquide est alors admis dans la cuve d'imprégnation sous vide à 10-² mm de mercure. Les pains capacitifs sont alors imprégnés par immersion. On considère que le condensateur est complètement imprégné lorsque l'augmentation de capacité sur huit heures n'excède par 1 %. A ce stade, le vide est cassé sous azote à pression atmosphérique et la température est alors coupée. Lorsque l'ensemble est refroidi, le liquide est vidé de la cuve et l'on obture le trou d'imprégnation par soudure d'une capsule sur l'ouverture 23.

Les condensateurs ainsi obtenus sont alors soumis à des contrôles de fin de production de type classique, tels que des essais d'étanchéité, des contrôles électriques à température ambiante et de traitement de finition.

## Revendications

1. Condensateur de puissance du type constitué par au moins un élément capacitif obtenu par bobinage d'au moins deux films plastiques métallisés (1), lesdits films plastiques métallisés étant des films polymères à surface rugueuse présentant des motifs de crénelage (6) formés de démétallisations locales définissant des surfaces métallisées sensiblement égales aux surfaces des défauts à isoler, caractérisé en ce que l'épaisseur desdits films plastiques est ajustée de façon que la variation de capacité dudit condensateur soit sensiblement égale à 2 % au terme de la durée de vie dudit condensateur.

2. Condensateur de puissance selon la revendication 1, caractérisé en ce que les surfaces métallisées (5) ont chacune la forme d'un losange.

3. Condensateur de puissance selon la revendication 2, caractérisé en ce que la surface définie par un losange (5) est sensiblement égale à 1 cₘ₂.

4. Condensateur de puissance selon la revendication 1, 2 ou 3, caractérisé en ce que les films polymères sont des films homopolymères de polypropylène.

5. Condensateur de puissance selon la revendication 1,2,3 ou 4, caractérisé en ce que chacun des deux films plastiques métallisés comprend un dépôt métallique (4) sur le bord métallisé du film destiné à participer à l'électrode du condensateur.

6. Condensateur de puissance selon la revendication 5, caractérisé en ce que le dépôt métallique (4) est un dépôt de zinc ou d'aluminium.

7. Condensateur de puissance selon l'une quelconque des revendications précédentes, caractérisé en ce que chaque élément capacitif est imprégné d'huile de colza.

8. Condensateur de puissance selon l'une quelconque des revendications précédentes, caractérisé en ce que le ou les éléments capacitifs, préalablement associés sous forme de pains capacitifs, sont montés dans une cuve métallique avec interposition de cales en matériau isolant.

9. Procédé de fabrication d'un condensateur de puissance selon l'une quelconque des revendications 1 à 8 caractérisé par les étapes suivantes :
- bobinage sur au moins une broche (B) d'au moins deux films plastiques métallisés (1) de manière à obtenir au moins un élément capacitif cylindrique, le bobinage étant réalisé avec un asservissement continu du foisonnement ;
- aplatissement des éléments cylindriques ainsi obtenus de façon à former des éléments plats présentant une épaisseur prédéterminée ;
- constitution de pains capacitifs par association de différents éléments plats ;
- étuvage sous vide des pains capacitifs ;
- shoopage des terminaisons latérales des pains capacitifs ;
- câblage des connexions sur les pains capa- citif ;
- mise en cuve et imprégnation des pains capacitifs avec de l'huile de colza.
